# EUROPEAN PATENT SPECIFICATION

(11) **EP 3 443 865 B1**
(45) Date of publication and mention of the grant of the patent: **14.06.2023**
(21) Application number: 17781750.9
(22) Date of filing: 04.03.2017
(51) Int. Cl.: A47C 5/00, A47C 7/00, A47C 5/06

(54) **BRAIDED RATTAN STRUCTURE AND RATTAN CHAIR MANUFACTURED BY SAME AND KNOT FORMING METHOD THEREFOR**
GEFLOCHTENE RATTANSTRUKTUR UND DAMIT HERGESTELLTER RATTANSTUHL UND KNOTENHERSTELLUNGSVERFAHREN DAFÜR
STRUCTURE EN ROTIN TRESSÉ ET CHAISE EN ROTIN FABRIQUÉE PAR CELLE-CI ET PROCÉDÉ DE FORMATION DE NOEUD ASSOCIÉ

(30) Priority: 15.04.2016 CN 201610242248; 15.04.2016 CN 201610239481
(43) Date of publication of application: 20.02.2019
(73) Proprietor: Li, Hongguang, Jinhua, Zhejiang Province, 321000 (CN)
(72) Inventor: Li, Hongguang, Jinhua, Zhejiang Province, 321000 (CN)
(74) Representative: Ipside
(86) International application number: PCT/CN2017/075669
(87) International publication number: WO 2017/177774

(56) References cited:
- CN-A- 104 586 126
- CN-A- 105 768 653
- CN-A- 105 799 141
- CN-U- 204 292 619
- CN-U- 204 292 619
- CN-U- 204 420 547
- CN-Y- 2 703 456
- CN-Y- 201 097 833
- NL-C2- 2 001 536
- US-A1- 2002 140 273
- US-A1- 2010 276 980

## Description

### Technical Field

The present invention relates to manufacture field of rattan products, especially to a machine-processed rattan weaving structure, a rattan chair made with the structure and a method for forming a convex knot of plastic rattan.

### Background

The existing rattan products, such as rattan chairs, utilizes artificial weaving, in which workers must have certain rattan weaving skills, and weaving skill level of weavers also has a great impact on product quality. In the meantime, the artificial weaving also requires much time and efforts so that the production cost is very high. At present, machine weaving can only weave flat rattan structures, and there is no good solution in the industry to easily make rattan products from flat rattan structures, for which the main reason is that for a machine weaving rattan structure, its edge can hardly be secured to a skeleton of an existing table, chair and other products. If an artificial weaving method is applied, it would be very labor-intensive and high in cost; if a sewing method is applied, strength would be much lower than that of general artificial weaving rattan structure, and once a suture is broken, the structure of the entire rattan product would be broken.

In addition, the existing rattan products are mostly manufactured by using plastic rattan, mainly due to the high cost of natural rattan, the influences of seasons, and the limited number. In order to increase the weaving speed and reduce the labor consumption, a machine plane weaving technology is introduced in rattan weaving, and in order to install and secure the rattan products of plane weaving, convex knots must be made edge of the rattan weaving products, the convex knots are brought into an internal cavity of skeleton structure so as to perform installation and fixation.

Plastic rattan is made from a material of ultra-high molecular weight polyethylene (UHMWPE), this material is of poor heat resistance (heat distortion temperature), poor formability, and thus is not appropriate to directly contact a high temperature that may cause its heat deformation, and this may also easily cause carbonization and nigrescence, as well as embrittlement in texture; if the convex knots are made via artificial weaving, the production would be of long cycle and high cost. Document CN204292619U relates to plastic rattan and can be regarded as useful to understand the invention.

### Contents of the Invention

Relative to the existing machine-processed plane rattan structures, the present invention provides a rattan weaving structure which is easy in installation and fixation.

Considering the existing needs in forming a convex knot of plastic rattan, the present invention provides a method for forming a convex knot of plastic rattan, and this method is of high efficiency, high strength of the formed convex knot, and absence of carbonization and nigrescence.

The technical solution of the present invention is carried out via the following manners.

A rattan weaving structure as defined in claim 1 is provided, a convex knot is provided at edge of the rattan weaving structure, that is, both of two ends of each rattan are provided with convex knots, the convex knots have a cross section greater than a middle cross section of the rattan; in order to secure the rattan weaving structure, a corresponding skeleton structure is designed, the skeleton is a tube, the tube has an internal cavity, the internal cavity communicates with external through a narrow channel, the narrow channel is slightly wider than the middle cross section of the rattan and narrower than the cross section of the convex section, the rattan weaving structure passes through the narrow channel so that the convex knot is secured in the internal cavity of the skeleton, thereby completing the installation and fixation of the rattan weaving structure on the skeleton. This fixing method is simple in process, has high strength, and the whole structure would not be influenced even when a rattan or a convex knot is broken. Moreover, this rattan weaving structure does not have high requirements of skeleton, and the installation and fixation could be completed even the skeleton is bent.

In the above-mentioned rattan weaving structure, the rattan is replaced by plastic rattan; since natural rattan has always been in short supply, the use of plastic rattan instead of natural rattan increases the supply of rattan and reduces cost, and is not influenced with seasonal effects of rattan supply.

A rattan chair as defined in claim 3, which comprises a chair seat, a skeleton, an armrest and a base. The chair seat is woven from rattan, a convex knot is provided at edge of the chair seat, i.e., both of two ends of the rattan are provided with convex knot, the convex knot has a cross section greater than a middle cross section of the rattan; the skeleton of the rattan chair is a tube, the tube has an internal cavity, the internal cavity connects with external through a narrow channel, the narrow channel is slightly wider than the middle cross section of the rattan and narrower than the cross section of the convex section, the chair seat woven from rattan passes through the narrow channel so that the convex knot is secured in the internal cavity of the skeleton; and the armrest and the base are secured on the skeleton.

In the rattan chair, the skeleton of the rattan chair consists of a side frame and a top frame, and after the side frame and the top frame pass through the chair seat woven from rattan respectively, the side frame and the top frame are turned over to open the chair seat, and secured with a fixing member. In the rattan chair of this structure, the side frame has a shape in accordance with an ergonomic curve so as to improve comfort of the rattan chair.

In the rattan chair, the fixing member consists of a first fixing member and a second fixing member, the first fixing member and the second fixing member are provided with bumps and grooves; the fixing member is set at two ends of the side frame and the top frame, after the side frame and the top frame are turned over, a combination of the first fixing member and the second fixing member is provided at a corresponding corner, and bumps of each combination of fixing members are embedded in corresponding grooves. In order to obtain more stable fixation effects, the first fixing member and the second fixing member are provided with a skeleton fixing hole and a fixing-member fixing hole, the fixing member and the skeleton are secured together by using a bolt that passes through the skeleton fixing hole, and the first fixing member and the second fixing member are secured together by using a bolt that passes through the fixing-member fixing hole.

A method as defined in claim 8, for forming the convex knot, the method comprises the following steps: first pressing and fixing edge of plastic rattan with a mold, then setting heating elements in a round in periphery of the edge, heating the edge of plastic rattan with the heating elements via thermal radiation to cause shrinkage, accumulation on the mold and final formation of the convex knot. Since the heating elements do not directly contact with the plastic rattan, the edge of plastic rattan is heated up slowly, and starts shrinkage due to being heated when its temperature just reaches deformation temperature of material; and with the increase of distance between the edge of plastic rattan and the heating elements after heat shrinkage, the rate of increase of temperature of the edge of plastic rattan would slow down, and after a certain time, the edge of plastic rattan shrinks and accumulates on the outside of the mold to form a convex knot.

In the method for forming the convex knot, the mold is provided with a mold cavity, and the convex knot is molded in the mold cavity when the edge of plastic rattan is heated for shrinkage. In this way, the formed convex knots could be controlled in shape to have same size, which is convenient in installation and fixation_{∘}

In the method for forming the convex knot, the heating elements and the edge of plastic rattan have an initial distance of 3-8 cm, and the heating elements have a heating temperature of 130-180°C. According to different heating temperatures and corresponding to different initial distances, the rate of shrinkage of plastic rattan would became fast with the increase of temperature. The experiments show that when the heating elements are of 150°C, and the initial distance between the heating elements and the edge of plastic rattan is 5 cm, the rate of formation of convex knot would be less than 10 seconds, which would bring about better production efficiency, and the convex knot has beautiful appearance and high strength.

### Brief Description of the Drawings

Fig.1 shows a schematic view of the rattan weaving structure of the present invention;
Fig.2 shows a schematic view of the rattan chair of the present invention;
Fig.3 shows a schematic view of combination of rattan weaving structure and skeleton;
Fig.4 shows a schematic view of a fixing member;
Fig.5 shows a schematic view of a first fixing member;
Fig.6 shows a schematic view of a second fixing member;
Fig.7 shows a state view before formation of convex knot;
Fig.8 shows a state view after formation of convex knot.

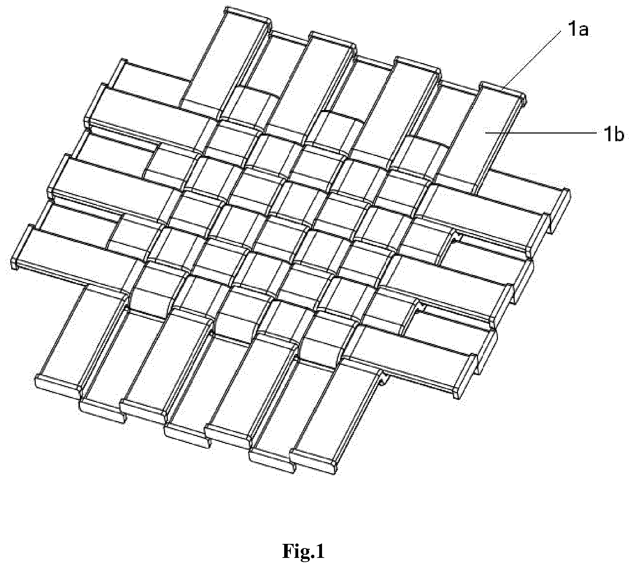

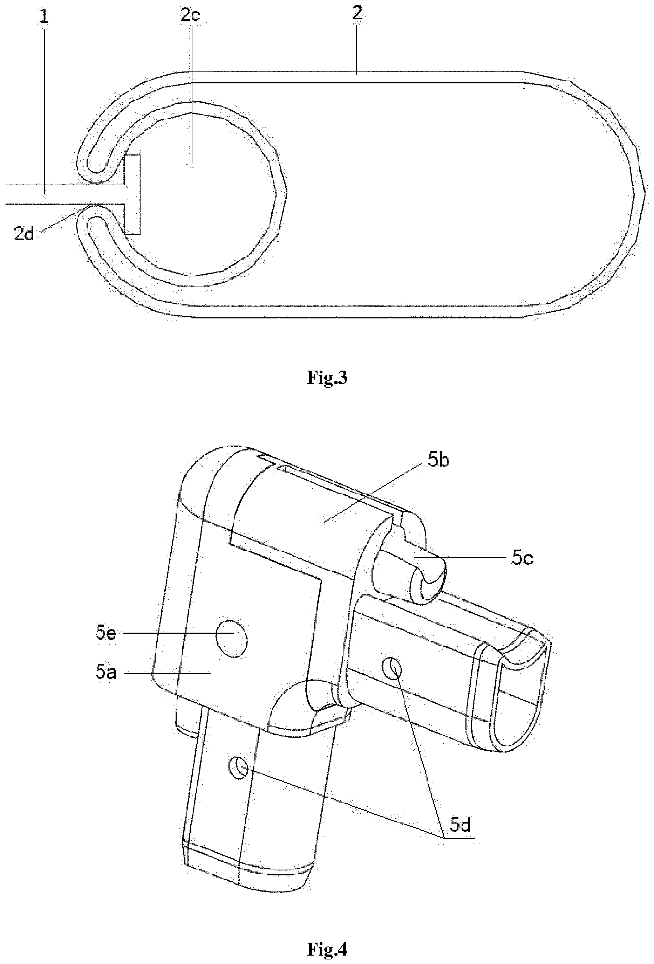

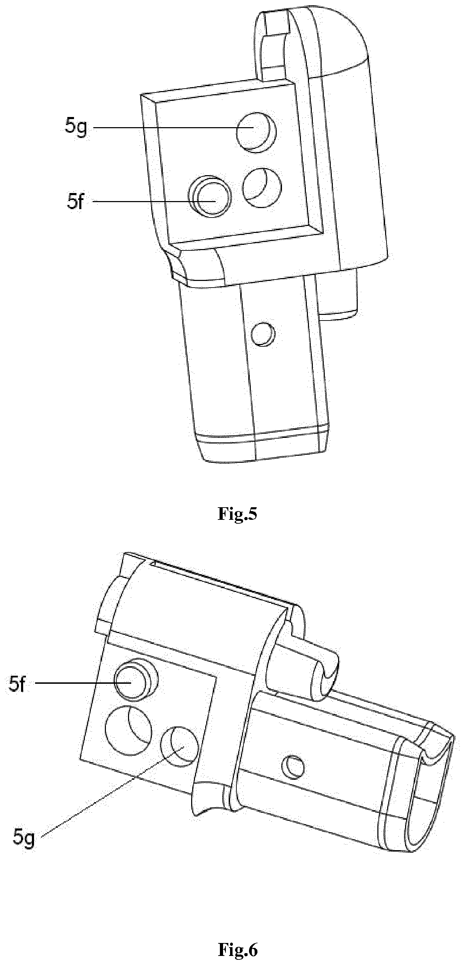

In Fig.1 to Fig.8,
1 represents a chair seat; 1a represents a rattan; 1b represents a convex knot; 2 represents a skeleton; 2a represents a side frame; 2b represents a top frame; 2c represents an internal cavity; 2d represents a narrow channel; 3 represents an armrest; 4 represents a base; 5a represents a first fixing member; 5b represents a second fixing member; 5c represents a place slot; 5d represents a skeleton fixing hole; 5e represents a fixing-member fixing hole; 5f represents a bump; 5g represents a groove; 6 represents a mold; 6a represents a mold cavity; 7 represents a heating element.

### Specific Models for Carrying Out the Invention

By referring to the drawings, the present invention is further illustrated with the examples.

Referring to Fig.1, a rattan weaving structure is provided, a convex knot **1b** is provided at edge of the rattan weaving structure, that is, both of two ends of each rattan **1a** are provided with convex knots **1b**. The convex knot **1b** has a cross section greater than a middle cross section of the rattan **1a.** The rattan **1a** used in the rattan weaving structure is plastic rattan.

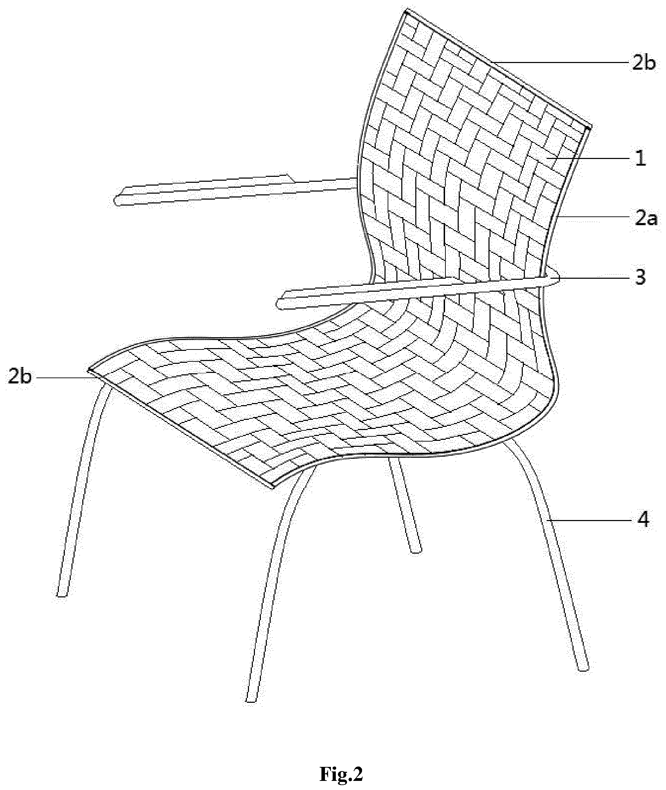

Referring to Fig.2 to Fig.6, a rattan chair comprises a chair seat **1,** a skeleton **2,** an armrest **3** and a base **4.** The chair seat **1** is woven from the rattan **1a.** A convex knot **1b** is provided at edge of the chair seat **1,** i.e., both of two ends of the rattan **1a** are provided with convex knots. The convex knot **1b** has a cross section greater than a middle cross section of the rattan **1a.** The skeleton **2** of the rattan chair is a tube which has an internal cavity **2c.** The internal cavity **2c** communicates with external through a narrow channel **2d.** The narrow channel **2d** is slightly wider than the middle cross section of the rattan **1a** and narrower than the cross section of the convex section **1b.** The chair seat **1** woven from rattan passes through the narrow channel **2d** so that the convex knot **1b** is secured in the internal cavity **2c** of the skeleton **2.** The armrest **3** and the base **4** are secured on the skeleton **2.** The skeleton **2** of the rattan chair comprises a side frame 2a and a top frame 2b. The side frame 2a has a shape in accordance with an ergonomic curve, and after the side frame 2a and the top frame 2b pass through the chair seat 1 woven from rattan respectively, the side frame 2a and the top frame 2b are turned over to open the chair seat **1** and secured with a fixing member. The fixing member comprises a first fixing member **5a** and a second fixing member **5b,** and the first fixing member **5a** and the second fixing member **5b** are provided with bumps **5f** and grooves **5g.** The fixing member is set at two ends of the side frame **2a** and the top frame **2b.** After the side frame **2a** and the top frame **2b** are turned over, a combination of the first fixing member **5a** and the second fixing member **5b** is provided at a corresponding corner, and bumps **5f** of each combination of fixing members are embedded in the corresponding grooves **5g.** The first fixing member **5a** and the second fixing member **5b** are provided with a skeleton fixing hole **5d** and a fixing-member fixing hole **5e.** The fixing member and the skeleton **2** are secured together by using a bolt that passes through the skeleton fixing hole **5d,** and the first fixing member **5a** and the second fixing member **5b** are secured together by using a bolt that passes through the fixing-member fixing hole **5e.** The fixing member is further provided with a place slot **5c,** which was used for providing a place for the chair seat **1** woven from rattan.

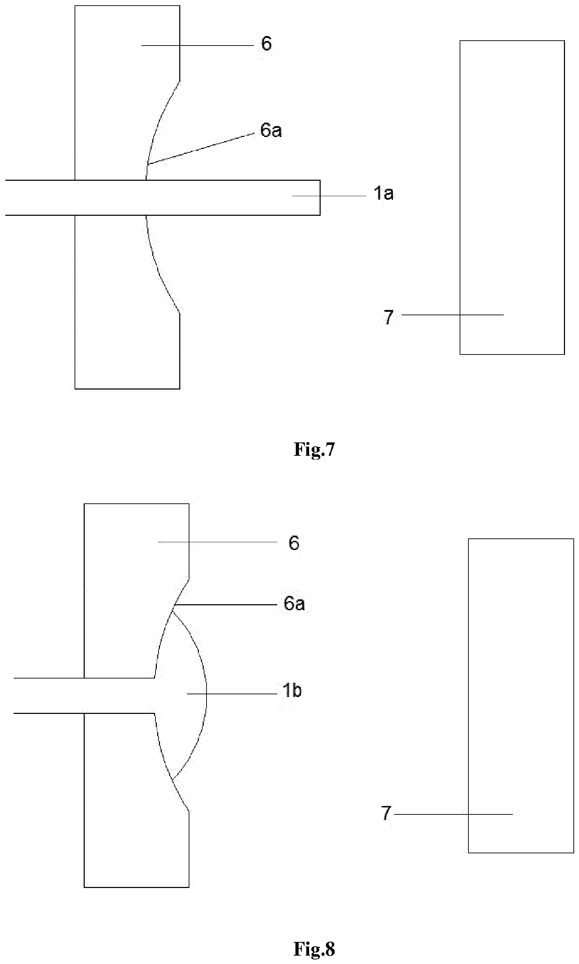

Referring to Fig.7 to Fig.8, in a specific example of the method for forming the convex knot according to the present invention, the method comprises the following steps: edge of plastic rattan **1a** being pressed and secured with a mold **6,** then heating elements **7** being set in a round in periphery, the heating elements **7** having a stable heating temperature of about 150°C, and the initial distance between the heating elements **7** and the edge of plastic rattan **1a** being 5 cm, the edge of plastic rattan **1a** being heated by the heating elements **7** via thermal radiation to cause shrinkage, accumulation in the mold cavity **6a** of the mold **6,** and the convex knot **1b** being formed after about 10 seconds. Those skilled in the art would well know a variety of variants of the mold cavity **6a** and thus the corresponding convex knot **1b** would have a variety of variants.

Experiments show that when the heating element **7** has a stable heating temperature of about 130°C and the initial distance between the heating elements **7** and the edge of plastic rattan **1a** is 3 cm, the plastic rattan **1a** shows a relatively slower shrinkage rate, and the convex knot is formed after about 20 seconds. When the heating element **7** has a stable heating temperature of about 180°C and the initial distance between the heating elements **7** and the edge of plastic rattan **1a** is 8 cm, the plastic rattan **1a** shows a relatively faster shrinkage rate, and the convex knot is formed after about 7 seconds, but the formed convex knot **1b** has a strength slightly lower than the strength of material itself.

## Claims

1. A machine-processed plastic rattan weaving structure, **characterized in that** the plastic rattan weaving structure is made by a plurality of first plastic rattans (1a) extending in a longitudinal direction of the rattan weaving structure and a plurality of second plastic rattans extending in a transverse direction of the plastic rattan weaving structure, the first and the second plastic rattans being woven according to a plain weave pattern, a convex knot (1b) is provided at an edge of the plastic rattan weaving structure, both of two ends of each plastic rattan are provided with convex knots which are formed by:
- first pressing and fixing edge of plastic rattan with a mold (6),
- then setting heating elements (7) in a round in periphery of the edge without direct contact with the plastic rattan,
- heating the edge of the plastic rattan with the heating elements via thermal radiation to cause shrinkage and accumulation on the mold, to finally form the convex knot, the convex knot having a cross section greater than a middle cross section of the rattan.

2. The machine-processed plastic rattan weaving structure according to claim 1, **characterized in that** the plastic rattan (1a) and the two convex knots (1b) at the two ends of the rattan cooperatively form a shape of I.

3. A plastic rattan chair, comprising a chair seat (1), a skeleton (2), an armrest (3) and a base (4), **characterized in that** the chair seat is woven from plastic rattans (1a) by a machine weaving method, the plastic rattan weaving structure is made by a plurality of first plastic rattans extending in a longitudinal direction of the rattan weaving structure and a plurality of second plastic rattans extending in a transverse direction of the plastic rattan weaving structure, the first and the second plastic rattans being woven according to a plain weave pattern, a convex knot (1b) is provided at an edge of the chair seat, both of two ends of each rattan are provided with convex knots which are formed by:
- first pressing and fixing edge of plastic rattan with a mold (6),
- then setting heating elements (7) in a round in periphery if the edge without direct contact with the plastic rattan,
- heating the edge of the plastic rattan with the heating elements via thermal radiation to cause shrinkage and accumulation on the mold, to finally form the convex knot,
the convex knot having a cross section greater than a middle cross section of the plastic rattan; the skeleton of the rattan chair is a tube, the tube has an internal cavity (2c), the internal cavity communicates with external through a narrow channel (2d), the narrow channel is slightly wider than the middle cross section of the plastic rattan and narrower than the cross section of the convex section, the chair seat woven from plastic rattan passes through the narrow channel so that the convex knot is secured in the internal cavity of the skeleton; and the armrest and the base are secured on the skeleton.

4. The plastic rattan chair according to claim 3, **characterized in that** the skeleton (2) of the plastic rattan chair comprises a side frame (2a) and a top frame (2b), and after the side frame and the top frame pass through the chair seat woven from plastic rattan respectively, the side frame and the top frame are turned over to open the chair seat, and secured with a fixing member (5a, 5b).

5. The plastic rattan chair according to claim 4, **characterized in that** the side frame (2a) has a shape in accordance with an ergonomic curve.

6. The plastic rattan chair according to claim 4, **characterized in that** the fixing member comprises a first fixing member (5a) and a second fixing member (5b), the first fixing member and the second fixing member are provided with bumps (5f) and grooves (5g); the fixing member is set at two ends of the side frame (2a) and the top frame (2b), after the side frame and the top frame are turned over, a combination of the first fixing member and the second fixing member is provided at a corresponding corner, and bumps of each combination of fixing members are embedded in corresponding grooves.

7. The plastic rattan chair according to claim 6, **characterized in that** the first fixing member (5a) and the second fixing member (5b) are provided with a skeleton fixing hole and a fixing-member fixing hole, the fixing member and the skeleton (2) are secured together by using a bolt that passes through the skeleton fixing hole, and the first fixing member and the second fixing member are secured together by using a bolt that passes through the fixing-member fixing hole.

8. A method for forming a convex knot (1b), of a plastic rattan weaving structure according to claim 1 or 3, **characterized in that** the method comprises the following steps:
- first pressing and fixing edge of plastic rattan (1a) with a mold (6) which has a mold cavity (6a), then setting heating elements (7) in a round in periphery of the edge without direct contact with plastic rattan,
- heating the edge of the plastic rattan with the heating elements via thermal radiation to cause shrinkage and accumulation on the mold cavity of the mold to finally form the convex knot.

9. The method for forming the convex knot (1b) according to claim 8, **characterized in that** the heating elements (7) and the edge of the plastic rattan (1a) have an initial distance of 3-8 cm formed therebetween.

10. The method for forming the convex knot (1b) according to claim 8, **characterized in that** the heating elements (7) have a heating temperature of 130-180°C.

11. The method for forming the convex knot (1b) according to claim 8, **characterized in that** the heating elements (7) and the edge of plastic rattan (1a) have an initial distance of 5 cm, and the heating elements have a heating temperature of 150°C.

## Patentansprüche

1. Maschinell verarbeitete Kunststoff-Rattanflechtstruktur, **dadurch gekennzeichnet, dass** die Kunststoff-Rattanflechtstruktur durch eine Vielzahl von ersten Kunststoff-Rattans (la), die sich in einer Längsrichtung der Rattanflechtstruktur erstrecken, und eine Vielzahl von zweiten Kunststoff-Rattans, die sich in einer Querrichtung der Kunststoff-Rattanflechtstruktur erstrecken, hergestellt ist, wobei der erste und der zweite Kunststoff-Rattan gemäß einem Flechtmuster gewebt sind, ein konvexer Knoten (1b) an einer Kante der Kunststoff-Rattanflechtstruktur bereitgestellt ist, beide der zwei Enden jedes Kunststoff-Rattans mit konvexen Knoten bereitgestellt sind, die gebildet sind durch:
- zuerst, Pressen und Fixieren der Kanten des Kunststoff-Rattans mit einer Form (6),
- dann Einstellen von Heizelementen (7) rund um den Umfang der Kante ohne direkten Kontakt mit dem Kunststoff-Rattan,
- Erwärmen der Kante des Kunststoff-Rattans mit den Heizelementen mittels Wärmestrahlung, um ein Schrumpfen und eine Ansammlung auf der Form zu bewirken, um schließlich den konvexen Knoten zu bilden,
wobei der konvexe Knoten einen Querschnitt aufweist, der größer ist als ein mittlerer Querschnitt des Rattans.

2. Maschinell bearbeitete Kunststoff-Rattanflechtstruktur nach Anspruch 1, **dadurch gekennzeichnet, dass** der Kunststoff-Rattan (la) und die beiden konvexen Knoten (lb) an den beiden Enden des Rattans zusammen eine I-Form bilden.

3. Kunststoff-Rattanstuhl, umfassend eine Sitzfläche (1), ein Gerüst (2), eine Armlehne (3) und eine Basis (4), **dadurch gekennzeichnet, dass** die Sitzfläche aus Kunststoff-Rattanflechtstrukturen (1a) mittels eines maschinellen Webverfahrens geflochten wird, wobei die Kunststoff-Rattanflechtstruktur aus einer Vielzahl von ersten Kunststoff-Rattanflechtstrukturen hergestellt sind, die sich in einer Längsrichtung der Rattanflechtstruktur erstrecken, und einer Vielzahl von zweiten Kunststoff-Rattanflechtstrukturen, die sich in einer Querrichtung der Kunststoff-Rattanflechtstruktur erstrecken, wobei die erste und die zweite Kunststoff-Rattanstruktur gemäß einem Webmuster geflochten sind, ein konvexer Knoten (1b) an einer Kante der Sitzfläche bereitgestellt ist, wobei die beiden Enden jeder Rattanstruktur mit konvexen Knoten bereitgestellt sind, die gebildet sind durch:
- zuerst, Pressen und Fixieren der Kanten des Kunststoff-Rattans mit einer Form (6),
- dann Einstellen von Heizelementen (7) rund um den Umfang der Kante ohne direkten Kontakt mit dem Kunststoff-Rattan,
- Erwärmen der Kante des Kunststoff-Rattans mit den Heizelementen mittels Wärmestrahlung, um ein Schrumpfen und eine Ansammlung auf der Form zu bewirken, um schließlich den konvexen Knoten zu bilden, wobei der konvexe Knoten einen Querschnitt aufweist, der größer ist als ein mittlerer Querschnitt des Kunststoff-Rattans; wobei das Gerüst des Rattanstuhls ein Rohr ist, das einen inneren Hohlraum aufweist (2c), wobei der innere Hohlraum mit der Außenseite durch einen schmalen Kanal (2d) verbunden ist, wobei der schmale Kanal etwas breiter als der mittlere Querschnitt des Kunststoff-Rattans und schmaler als der Querschnitt des konvexen Abschnitts ist, wobei die aus Kunststoff-Rattan geflochtene Sitzfläche durch den schmalen Kanal hindurchgeht, sodass der konvexe Knoten in dem inneren Hohlraum des Gerüsts befestigt ist; und wobei die Armlehne und die Basis am Gerüst befestigt sind.

4. Kunststoff-Rattanstuhl nach Anspruch 3, **dadurch gekennzeichnet, dass** das Gerüst (2) des Kunststoff-Rattanstuhls einen Seitenrahmen (2a) und einen oberen Rahmen (2b) umfasst, und dass nach dem Durchgang des Seitenrahmens und des oberen Rahmens durch die aus Kunststoff-Rattan geflochtene Sitzfläche der Seitenrahmen und der obere Rahmen umgedreht werden, um die Sitzfläche zu öffnen, und mit einem Befestigungselement (5a, 5b) befestigt werden.

5. Kunststoff-Rattanstuhl nach Anspruch 4, **dadurch gekennzeichnet, dass** der Seitenrahmen (2a) eine Form gemäß einer ergonomischen Biegung aufweist.

6. Kunststoff-Rattanstuhl nach Anspruch 4, **dadurch gekennzeichnet, dass** das Befestigungselement ein erstes Befestigungselement (5a) und ein zweites Befestigungselement (5b) umfasst, wobei das erste Befestigungselement und das zweite Befestigungselement mit Höckern (5f) und Rillen (5g) bereitgestellt sind; wobei das Befestigungselement an zwei Enden des Seitenrahmens (2a) und des oberen Rahmens (2b) eingestellt ist, wobei nach dem Umdrehen des Seitenrahmens und des oberen Rahmens eine Kombination aus dem ersten Befestigungselement und dem zweiten Befestigungselement an einer entsprechenden Ecke bereitgestellt wird und Höcker jeder Kombination von Befestigungselementen in entsprechende Nuten eingebettet sind.

7. Kunststoff-Rattanstuhl nach Anspruch 6, **dadurch gekennzeichnet, dass** das erste Befestigungselement (5a) und das zweite Befestigungselement (5b) mit einem Gerüstbefestigungsloch und einem Befestigungselementbefestigungsloch bereitgestellt sind, das Befestigungselement und das Gerüst (2) unter Verwendung eines Bolzens, der durch das Gerüstbefestigungsloch hindurchgeht, aneinander befestigt sind, und das erste Befestigungselement und das zweite Befestigungselement unter Verwendung eines Bolzens, der durch das Befestigungselementbefestigungsloch hindurchgeht, aneinander befestigt sind.

8. Verfahren zum Bilden eines konvexen Knotens (lb) einer Kunststoff-Rattanflechtstruktur nach Anspruch 1 oder 3, **dadurch gekennzeichnet, dass** das Verfahren die folgenden Schritte umfasst:
- zuerst, Pressen und Befestigen der Kanten des Kunststoff-Rattans (la) mit einer Form (6), die einen Formhohlraum (6a) aufweist,
- dann Einstellen von Heizelementen (7) rund um den Umfang der Kante ohne direkten Kontakt mit dem Kunststoff-Rattan,
- Erwärmen der Kante des Kunststoff-Rattans mit den Heizelementen mittels Wärmestrahlung, um ein Schrumpfen und eine Ansammlung auf der Form zu bewirken, um schließlich den konvexen Knoten zu bilden.

9. Verfahren zum Bilden des konvexen Knotens (lb) nach Anspruch 8, **dadurch gekennzeichnet, dass** die Heizelemente (7) und die Kante des Kunststoff-Rattans (la) einen anfänglichen Abstand von 3-8 cm dazwischen ausgebildet aufweisen.

10. Verfahren zum Bilden des konvexen Knotens (lb) nach Anspruch 8, **dadurch gekennzeichnet, dass** die Heizelemente (7) eine Heiztemperatur von 130-180 °C aufweisen.

11. Verfahren zum Bilden des konvexen Knotens (lb) nach Anspruch 8, **dadurch gekennzeichnet, dass** die Heizelemente (7) und die Kante des Kunststoff-Rattans (la) einen anfänglichen Abstand von 5 cm aufweisen und die Heizelemente eine Heiztemperatur von 150 °C aufweisen.

## Revendications

1. Structure de tissage de rotin de plastique traitée par machine, **caractérisée en ce que** la structure de tissage de rotin de plastique est réalisée par une pluralité de premiers rotins de plastique (1a) s'étendant dans une direction longitudinale de la structure de tissage de rotin et une pluralité de deuxièmes rotins de plastique s'étendant dans une direction transversale de la première structure de rotin de plastique, les premier et deuxième rotins de plastique étant tissés selon un schéma de tissage simple, un noeud convexe (1b) est fourni au niveau d'un bord de la structure de tissage de rotin de plastique, les deux extrémités de chaque rotin de plastique sont dotées de noeuds convexes qui sont formés par :
- d'abord la pression et la fixation d'un bord de rotin de plastique avec un moule (6),
- puis le placement d'éléments chauffants (7) en cercle en périphérie du bord sans contact direct avec le rotin de plastique,
- le chauffage du bord du rotin de plastique avec les éléments chauffants par un rayonnement thermique pour provoquer un retrait et une accumulation sur le moule, pour former finalement le noeud convexe,
le noeud convexe ayant une section transversale supérieure à une section transversale intermédiaire du rotin.

2. Structure de tissage de rotin de plastique traité par machine selon la revendication 1, **caractérisée en ce que** le rotin de plastique (1a) et les deux noeuds convexes (1b) au niveau des deux extrémités du rotin forment en coopération une forme de I.

3. Chaise en rotin de plastique, comprenant un siège de chaise (1), un squelette (2), un accoudoir (3) et une base (4), **caractérisée en ce que** le siège de chaise est tissé à partir de rotins de plastique (1a) par un procédé de tissage par machine, la structure de tissage de rotin de plastique est réalisée par une pluralité de premiers rotins de plastique s'étendant dans une direction longitudinale de la structure de tissage de rotin et une pluralité de deuxièmes rotins de plastique s'étendant dans une direction transversale de la structure de tissage de rotin de plastique, les premier et deuxième rotins de plastique étant tissés selon un motif de tissage simple, un noeud convexe (1b) est fourni au niveau d'un bord du siège de chaise, les deux extrémités de chaque rotin sont dotées de noeuds convexes qui sont formés par :
- d'abord la pression et la fixation d'un bord de rotin de plastique avec un moule (6),
- puis le placement d'éléments chauffants (7) en cercle en périphérie si le bord est sans contact direct avec le rotin de plastique,
- le chauffage du bord du rotin de plastique avec les éléments chauffants via un rayonnement thermique pour provoquer un retrait et une accumulation sur le moule, pour finalement former le noeud convexe,
le noeud convexe ayant une section transversale supérieure à une section transversale intermédiaire du rotin de plastique ; le squelette de la chaise en rotin est un tube, le tube présente une cavité interne (2c), la cavité interne communique avec un extérieur à travers un canal étroit (2d), le canal étroit est légèrement plus large que la section transversale intermédiaire du rotin de plastique et plus étroit que la section transversale de la section convexe, le siège de chaise tissé à partir de rotin de plastique passe à travers le canal étroit de sorte que le noeud convexe est fixé dans la cavité interne du squelette ; et l'accoudoir et la base sont fixés sur le squelette.

4. Chaise en rotin de plastique selon la revendication 3, **caractérisée en ce que** le squelette (2) de la chaise en rotin de plastique comprend un cadre latéral (2a) et un cadre supérieur (2b), et après que le cadre latéral et le cadre supérieur sont passés à travers le siège de chaise tissé à partir de rotin de plastique respectivement, le cadre latéral et le cadre supérieur sont retournés pour ouvrir le siège de chaise, et fixés avec un élément de fixation (5a, 5b).

5. Chaise en rotin de plastique selon la revendication 4, **caractérisé en ce que** le cadre latéral (2a) a une forme en fonction d'une courbe ergonomique.

6. Chaise en rotin de plastique selon la revendication 4, **caractérisé en ce que** l'élément de fixation comprend un premier élément de fixation (5a) et un deuxième élément de fixation (5b), le premier élément de fixation et le deuxième élément de fixation sont dotés de bosses (5f) et de rainures (5g) ; l'élément de fixation est placé au niveau de deux extrémités du cadre latéral (2a) et du cadre supérieur (2b), après que le cadre latéral et le cadre supérieur sont retournés, une combinaison du premier élément de fixation et du deuxième élément de fixation est fournie au niveau d'un coin correspondant, et des bosses de chaque combinaison d'éléments de fixation sont intégrées dans des rainures correspondantes.

7. Chaise en rotin de plastique selon la revendication 6, **caractérisée en ce que** le premier élément de fixation (5a) et le deuxième élément de fixation (5b) sont dotés d'un trou de fixation de squelette et d'un trou de fixation d'élément de fixation, l'élément de fixation et le squelette (2) étant fixés ensemble au moyen d'un boulon qui traverse le trou de fixation de squelette, et le premier élément de fixation et le deuxième élément de fixation sont fixés l'un à l'autre au moyen d'un boulon qui traverse le trou de fixation d'élément de fixation.

8. Procédé de formation d'un noeud convexe (1b) d'une structure de tissage de rotin de plastique selon la revendication 1 ou 3, **caractérisé en ce que** le procédé comprend les étapes suivantes :
- d'abord la pression et la fixation d'un bord de rotin de plastique (1a) avec un moule (6) qui présente une cavité de moule (6a),
- puis le placement d'éléments chauffants (7) en cercle en périphérie du bord sans contact direct avec le rotin de plastique,
- le chauffage du bord du rotin de plastique avec les éléments chauffants avec un rayonnement thermique pour provoquer un retrait et une accumulation sur la cavité de moule du moule pour finalement former le noeud convexe.

9. Procédé de formation du noeud convexe (1b) selon la revendication 8, **caractérisé en ce que** les éléments chauffants (7) et le bord du rotin de plastique (1a) ont une distance initiale de 3-8 cm formée entre eux.

10. Procédé de formation du noeud convexe (1b) selon la revendication 8, **caractérisé en ce que** les éléments chauffants (7) ont une température de chauffage de 130-180 °C.

11. Procédé de formation du noeud convexe (1b) selon la revendication 8, **caractérisé en ce que** les éléments chauffants (7) et le bord du rotin de plastique (1a) ont une distance initiale de 5 cm, et les éléments chauffants ont une température de chauffage de 150 °C.
